# EUROPEAN PATENT APPLICATION

(11) **EP 4 838 965 A1**
(43) Date of publication of application: **11.11.2026**
(21) Application number: 25751721.9
(22) Date of filing: 08.02.2025
(51) Int. Cl.: H04W 52/14

(54) **COMMUNICATION METHOD, DEVICE, AND STORAGE MEDIUM**

(30) Priority: 08.02.2024 CN 202410177013
(71) Applicant: Honor Device Co., Ltd., Shenzhen, Guangdong 518040 (CN)
(72) Inventor: CHI, Liangang, Shenzhen, Guangdong 518040 (CN)
(74) Representative: Goddar, Heinz J.
(86) International application number: PCT/CN2025/076484
(87) International publication number: WO 2025/168111

(57) **Abstract**

This application relates to the field of communication technologies, and in particular, to a communication method, a device, and a storage medium. A method applied to a terminal device includes: receiving a first uplink power control parameter set for a first operating mode (for example, a non-full duplex mode) and a second uplink power control parameter set for a second operating mode (for example, a full duplex mode) that are sent by a network device; when it is determined that an uplink signal corresponds to the first operating mode, sending the uplink signal based on a first uplink transmit power; and when it is determined that an uplink signal corresponds to the second operating mode, sending the uplink signal based on a second uplink transmit power. The first uplink transmit power is determined based on the first uplink power control parameter set, and the second uplink transmit power is determined based on the second uplink power control parameter set. According to embodiments of this application, the terminal device may transmit an uplink signal by using an uplink transmit power that is adapted to an operating mode of the network device, to implement precise power control in different modes.

## Description

This application claims priority to Chinese Patent Application No. 202410177013.X, filed with the China National Intellectual Property Administration on February 8, 2024 and entitled "COMMUNICATION METHOD, DEVICE, AND STORAGE MEDIUM", which is incorporated herein by reference in its entirety.

### TECHNICAL FIELD

This application relates to the field of communication technologies, and in particular, to a communication method, a device, and a storage medium.

### BACKGROUND

In a mobile communication system, uplink and downlink data transmission modes may be classified into time division duplex (time division duplex, TDD), frequency division duplex (frequency division Duplex, FDD), full duplex (full duplex, FD), and other modes. In a scenario of FD, subband non-overlapping full duplex (subband non-overlapping full duplex, SBFD) can implement full duplex on a base station side by dividing non-overlapping uplink/downlink subbands in a single carrier, and separately receiving and sending data on the subbands. That is, a network device, for example, a base station (gNB, gNodeB), supports a full duplex mode, and can simultaneously receive and send data on a same frequency. Alternatively, the network device supports the SBFD mode, and in an SBFD symbol area, uplink and downlink may exist in different subbands at any time.

In a full duplex mode scenario, a plurality of subbands in a single carrier may simultaneously perform receiving and sending operations. Therefore, additional interference is introduced. The additional interference includes cross-link interference (cross-link interference, CLI). For example, a downlink signal from an adjacent base station may cause interference to reception of an uplink signal for a serving base station, for another example, a downlink signal from a serving base station may cause self-interference to reception of an uplink signal for the serving base station, and for another example, an uplink signal from an adjacent terminal device may cause interference to reception of a downlink signal for a target terminal device. To cope with additional interference in the full duplex mode, a power on a specific resource needs to be precisely controlled, to suppress or better resist the foregoing additional interference. Otherwise, a sent signal may be incorrectly received.

### SUMMARY

This application aims to provide a communication method, a device, and a storage medium.

According to a first aspect, this application provides a communication method, applied to a terminal device, and including: receiving operating mode configuration information sent by a network device; receiving a first uplink power control parameter set for a first operating mode and a second uplink power control parameter set for a second operating mode that are sent by the network device; when it is determined, based on the operating mode configuration information, that a to-be-sent uplink signal corresponds to the first operating mode of the network device, sending the to-be-sent uplink signal to the network device based on a first uplink transmit power; and when it is determined, based on the operating mode configuration information, that a to-be-sent uplink signal corresponds to the second operating mode of the network device, sending the to-be-sent uplink signal to the network device based on a second uplink transmit power, where the first uplink transmit power is determined based on the first uplink power control parameter set, and the second uplink transmit power is determined based on the second uplink power control parameter set.

According to embodiments of this application, the network device sends power control parameters of the first operating mode and the second operating mode to the terminal device, and indicates, by using the operating mode configuration information, the operating mode of the network device corresponding to the uplink signal to be sent by the terminal device. In this way, the terminal device may use different power control parameters based on different operating modes, to obtain, through calculation, an uplink transmit power adapted to the current operating mode, and transmit the uplink signal based on the uplink transmit power, thereby implementing precise power control in different operating modes.

In a possible implementation of the first aspect, the first operating mode includes a non-full duplex mode, and the second operating mode includes a full duplex mode.

In a possible implementation of the first aspect, the operating mode configuration information includes uplink and downlink information of at least one time-frequency region, the at least one time-frequency region includes a time-frequency region of the to-be-sent uplink signal, and the uplink and downlink information indicates that the time-frequency region corresponds to the first operating mode or the second operating mode.

In a possible implementation of the first aspect, the operating mode configuration information includes operating mode indication information, and the operating mode indication information indicates the first operating mode or the second operating mode.

In a possible implementation of the first aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the first aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the first aspect, a parameter in the first uplink power control parameter set is configured as an absolute value, and the first-type parameter in the second uplink power control parameter set is configured as a relative value of the first-type parameter in the first uplink power control parameter set.

According to a second aspect, this application provides a communication method, applied to a terminal device, and including: receiving a first uplink power control parameter set sent by a network device for a first operating mode of the network device and a second uplink power control parameter set sent by the network device for a second operating mode of the network device; receiving setting information of power control parameters sent by the network device; sending a to-be-sent uplink signal to the network device based on a first uplink transmit power when the setting information of the power control parameters includes setting information of the first uplink power control parameter set; and sending a to-be-sent uplink signal to the network device based on a second uplink transmit power when the setting information of the power control parameters includes setting information of the second uplink power control parameter set, where the first uplink transmit power is determined based on the first uplink power control parameter set, and the second uplink transmit power is determined based on the second uplink power control parameter set.

According to the embodiments of this application, the network device sends power control parameters of the first operating mode and the second operating mode to the terminal device, and indicates, by using setting information of the power control parameters, the terminal device to use power control parameters corresponding to different operating modes, to obtain, through calculation, an uplink transmit power adapted to the current operating mode, and transmit an uplink signal based on the uplink transmit power, thereby implementing precise power control in different modes.

In a possible implementation of the second aspect, the first operating mode includes a non-full duplex mode, and the second operating mode includes a full duplex mode.

In a possible implementation of the second aspect, the setting information is configuration information.

In a possible implementation of the second aspect, the setting information is indication information, and the indication information includes information about at least one field in downlink control information DCI.

In a possible implementation of the second aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the second aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the second aspect, a parameter in the first uplink power control parameter set is configured as an absolute value, and the first-type parameter in the second uplink power control parameter set is configured as a relative value of the first-type parameter in the first uplink power control parameter set.

According to a third aspect, this application provides a communication method, applied to a terminal device, and including: receiving a first uplink power control parameter set sent by a network device for a first operating mode of the network device and a second uplink power control parameter set sent by the network device for a second operating mode of the network device; sending a to-be-sent uplink signal to the network device based on a first uplink transmit power when a measurement result obtained by measuring a target subband meets a first power control condition; and sending a to-be-sent uplink signal to the network device based on a second uplink transmit power when the measurement result obtained by measuring the target subband meets a second power control condition, where the first uplink transmit power is determined based on the first uplink power control parameter set, and the second uplink transmit power is determined based on the second uplink power control parameter set.

According to the embodiments of this application, the network device sends power control parameters of the first operating mode and the second operating mode to the terminal device. The terminal device determines, based on a subband measurement result, an operating mode corresponding to the to-be-sent uplink signal, calculates an uplink transmit power by using a power control parameter corresponding to the operating mode, and transmits an uplink signal based on the uplink transmit power, to implement precise power control in different operating modes.

In a possible implementation of the third aspect, the first operating mode includes a non-full duplex mode, and the second operating mode includes a full duplex mode.

In a possible implementation of the third aspect, the target subband is adjacent to a subband of the to-be-sent uplink signal; or a frequency domain distance between the target subband and a subband of the to-be-sent uplink signal is less than a first threshold.

In a possible implementation of the third aspect, the target subband is a subband of the to-be-sent uplink signal.

In a possible implementation of the third aspect, the target subband is a specified subband, and the method further includes: receiving subband configuration information sent by the network device, where the subband configuration information includes information about the specified subband.

In a possible implementation of the third aspect, the first power control condition is that the measurement result is less than or equal to a first measurement threshold, and the second power control condition is that the measurement result is greater than the first measurement threshold.

In a possible implementation of the third aspect, the method further includes: receiving configuration information or indication information of a measurement threshold sent by the network device, where the configuration information or the indication information includes the first measurement threshold.

In a possible implementation of the third aspect, the measurement result includes at least one measurement quantity, and the measurement quantity includes a synchronization signal reference signal received power SS-RSRP, a channel state information reference signal received power CSI-RSRP, and a received signal strength indicator RSSI.

In a possible implementation of the third aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the third aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the third aspect, a parameter in the first uplink power control parameter set is configured as an absolute value, and the first-type parameter in the second uplink power control parameter set is configured as a relative value of the first-type parameter in the first uplink power control parameter set.

According to a fourth aspect, this application provides a communication method, applied to a network device, and including: sending operating mode configuration information to a terminal device; and sending a first uplink power control parameter set for a first operating mode and a second uplink power control parameter set for a second operating mode to the terminal device, where the operating mode configuration information indicates that an uplink signal of the terminal device corresponds to the first operating mode or the second operating mode of the network device.

According to the embodiments of this application, the network device sends power control parameters of the first operating mode and the second operating mode to the terminal device, and indicates, by using the operating mode configuration information, the operating mode corresponding to the uplink signal to be sent by the terminal device. In this way, the terminal device may use different power control parameters based on different operating modes, to obtain, through calculation, an uplink transmit power adapted to the current operating mode, and transmit the uplink signal based on the uplink transmit power, thereby implementing precise power control in different operating modes.

In a possible implementation of the fourth aspect, the first operating mode includes a non-full duplex mode, and the second operating mode includes a full duplex mode.

In a possible implementation of the fourth aspect, the operating mode configuration information indicates the terminal device to send a to-be-sent uplink signal to the network device based on the first uplink transmit power when it is determined, based on the operating mode configuration information, that the to-be-sent uplink signal corresponds to the first operating mode; and send a to-be-sent uplink signal to the network device based on the second uplink transmit power when it is determined, based on the operating mode configuration information, that the to-be-sent uplink signal corresponds to the second operating mode, where the first uplink transmit power is determined based on the first uplink power control parameter set, and the second uplink transmit power is determined based on the second uplink power control parameter set.

In a possible implementation of the fourth aspect, the operating mode configuration information includes uplink and downlink information of at least one time-frequency region, the at least one time-frequency region includes a time-frequency region of the to-be-sent uplink signal, and the uplink and downlink information indicates that the time-frequency region corresponds to the first operating mode or the second operating mode.

In a possible implementation of the fourth aspect, the operating mode configuration information includes operating mode indication information, and the operating mode indication information indicates the first operating mode or the second operating mode.

In a possible implementation of the fourth aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the fourth aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the fourth aspect, a parameter in the first uplink power control parameter set is configured as an absolute value, and the first-type parameter in the second uplink power control parameter set is configured as a relative value of the first-type parameter in the first uplink power control parameter set.

According to a fifth aspect, this application provides a communication method, applied to a network device, and including: sending a first uplink power control parameter set for a first operating mode of the network device and a second uplink power control parameter set for a second operating mode of the network device to a terminal device; and sending setting information of power control parameters to the terminal device, where the setting information of the power control parameters includes setting information of the first uplink power control parameter set or setting information of the second uplink power control parameter set.

According to the embodiments of this application, the network device sends power control parameters of the first operating mode and the second operating mode to the terminal device, and indicates, by using setting information of the power control parameters, the terminal device to use power control parameters corresponding to different operating modes, so that the terminal device obtains, through calculation, an uplink transmit power adapted to the current operating mode, and transmits an uplink signal based on the uplink transmit power, thereby implementing precise power control in different operating modes.

In a possible implementation of the fifth aspect, the first operating mode includes a non-full duplex mode, and the second operating mode includes a full duplex mode.

In a possible implementation of the fifth aspect, the setting information of the power control parameter indicates the terminal device to send a to-be-sent uplink signal to the network device based on a first uplink transmit power when the setting information of the power control parameters includes setting information of the first uplink power control parameter set; and send a to-be-sent uplink signal to the network device based on a second uplink transmit power when the setting information of the power control parameters includes setting information of the second uplink power control parameter set, where the first uplink transmit power is determined based on the first uplink power control parameter set, and the second uplink transmit power is determined based on the second uplink power control parameter set.

In a possible implementation of the fifth aspect, the setting information is configuration information.

In a possible implementation of the fifth aspect, the setting information is indication information, and the indication information includes information about at least one field in downlink control information DCI.

In a possible implementation of the fifth aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the fifth aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the fifth aspect, a parameter in the first uplink power control parameter set is configured as an absolute value, and the first-type parameter in the second uplink power control parameter set is configured as a relative value of the first-type parameter in the first uplink power control parameter set.

According to a sixth aspect, this application provides a communication method, applied to a network device, and including: sending a first uplink power control parameter set for a first operating mode of the network device and a second uplink power control parameter set for a second operating mode of the network device to a terminal device; and sending configuration information or indication information of a measurement threshold to the terminal device, where the configuration information or the indication information of the measurement threshold includes a first measurement threshold, and the first measurement threshold corresponds to measurement of a target subband.

According to the embodiments of this application, the network device sends, to the terminal device, power control parameters of the first operating mode and the second operating mode, and the configuration information or the indication information including the first measurement threshold, so that the terminal device determines, based on the first measurement threshold and a subband measurement result, an operating mode corresponding to a to-be-sent uplink signal, calculates an uplink transmit power based on a power control parameter corresponding to the operating mode, and transmits an uplink signal based on the uplink transmit power, thereby implementing precise power control in different operating modes.

In a possible implementation of the sixth aspect, the first operating mode includes a non-full duplex mode, and the second operating mode includes a full duplex mode.

In a possible implementation of the sixth aspect, the configuration information or the indication information of the measurement threshold enables the terminal device to send a to-be-sent uplink signal to the network device based on the first uplink transmit power when a measurement result obtained by measuring the target subband is less than or equal to the first measurement threshold; and send a to-be-sent uplink signal to the network device based on the second uplink transmit power when the measurement result obtained by measuring the target subband is greater than the first measurement threshold, where the first uplink transmit power is determined based on the first uplink power control parameter set, and the second uplink transmit power is determined based on the second uplink power control parameter set.

In a possible implementation of the sixth aspect, the target subband is a specified subband, and the method further includes: sending subband configuration information to the terminal device, where the subband configuration information includes information about the specified subband.

In a possible implementation of the sixth aspect, the measurement result includes at least one measurement quantity, and the measurement quantity includes a synchronization signal reference signal received power SS-RSRP, a channel state information reference signal received power CSI-RSRP, and a received signal strength indicator RSSI.

In a possible implementation of the sixth aspect, the first uplink power control parameter set or the second uplink power control parameter set includes a parameter of at least one uplink channel or uplink signal. The uplink channel includes a physical uplink shared channel PUSCH, a physical uplink control channel PUCCH, and a physical random access channel PRACH. The uplink signal includes a sounding reference signal SRS.

In a possible implementation of the sixth aspect, the first uplink power control parameter set and the second uplink power control parameter set each include a parameter of at least one parameter type, and the at least one parameter type includes a first type; and a first-type parameter in the first uplink power control parameter set is greater than the first-type parameter in the second power control parameter set; or a first-type parameter in the first uplink power control parameter set is less than the first-type parameter in the second power control parameter set.

In a possible implementation of the sixth aspect, a parameter in the first uplink power control parameter set is configured as an absolute value, and the first-type parameter in the second uplink power control parameter set is configured as a relative value of the first-type parameter in the first uplink power control parameter set.

According to a seventh aspect, this application provides a terminal device, including a transmitter, a receiver, and a processor separately connected to the transmitter and the receiver, where the receiver is configured to: receive operating mode configuration information sent by a network device; and receive a first uplink power control parameter set for a first operating mode and a second uplink power control parameter set for a second operating mode that are sent by the network device; and the transmitter is configured to: when it is determined, based on the operating mode configuration information, that a to-be-sent uplink signal corresponds to the first operating mode of the network device, send the to-be-sent uplink signal to the network device based on a first uplink transmit power; and when it is determined, based on the operating mode configuration information, that a to-be-sent uplink signal corresponds to the second operating mode of the network device, send the to-be-sent uplink signal to the network device based on a second uplink transmit power, where the first uplink transmit power is determined based on the first uplink power control parameter set, and the second uplink transmit power is determined based on the second uplink power control parameter set.

According to an eighth aspect, this application provides a terminal device, including a transmitter, a receiver, and a processor separately connected to the transmitter and the receiver, where the receiver is configured to: receive a first uplink power control parameter set sent by a network device for a first operating mode of the network device and a second uplink power control parameter set sent by the network device for a second operating mode of the network device; and receive setting information of power control parameters sent by the network device; and the transmitter is configured to: send a to-be-sent uplink signal to the network device based on a first uplink transmit power when the setting information of the power control parameters includes setting information of the first uplink power control parameter set; and send a to-be-sent uplink signal to the network device based on a second uplink transmit power when the setting information of the power control parameters includes setting information of the second uplink power control parameter set, where the first uplink transmit power is determined based on the first uplink power control parameter set, and the second uplink transmit power is determined based on the second uplink power control parameter set.

According to a ninth aspect, this application provides a terminal device, including a transmitter, a receiver, and a processor separately connected to the transmitter and the receiver, where the receiver is configured to receive a first uplink power control parameter set sent by a network device for a first operating mode of the network device and a second uplink power control parameter set sent by the network device for a second operating mode of the network device; and the transmitter is configured to: send a to-be-sent uplink signal to the network device based on a first uplink transmit power when a measurement result obtained by measuring a target subband meets a first power control condition; and send a to-be-sent uplink signal to the network device based on a second uplink transmit power when the measurement result obtained by measuring the target subband meets a second power control condition, where the first uplink transmit power is determined based on the first uplink power control parameter set, and the second uplink transmit power is determined based on the second uplink power control parameter set.

According to a tenth aspect, this application provides a network device, including a transmitter, a receiver, and a processor separately connected to the transmitter and the receiver, where the transmitter is configured to: send operating mode configuration information to a terminal device; and send a first uplink power control parameter set for a first operating mode and a second uplink power control parameter set for a second operating mode to the terminal device, where the operating mode configuration information indicates that an uplink signal of the terminal device corresponds to the first operating mode or the second operating mode of the network device.

According to an eleventh aspect, this application provides a network device, including a transmitter, a receiver, and a processor separately connected to the transmitter and the receiver, where the transmitter is configured to: send a first uplink power control parameter set for a first operating mode of the network device and a second uplink power control parameter set for a second operating mode of the network device to a terminal device; and send setting information of power control parameters to the terminal device, where the setting information of the power control parameters includes setting information of the first uplink power control parameter set or setting information of the second uplink power control parameter set.

According to a twelfth aspect, this application provides a network device, including a transmitter, a receiver, and a processor separately connected to the transmitter and the receiver, where the transmitter is configured to: send a first uplink power control parameter set for a first operating mode of the network device and a second uplink power control parameter set for a second operating mode of the network device to a terminal device; and send configuration information or indication information of a measurement threshold to the terminal device, where the configuration information or the indication information of the measurement threshold includes a first measurement threshold, and the first measurement threshold corresponds to measurement of a target subband.

According to a thirteenth aspect, this application provides an electronic device, including: a memory, configured to store instructions executed by one or more processors of the electronic device, and a processor, where when the processor executes the instructions in the memory, the electronic device may perform the communication method.

According to a fourteenth aspect, this application provides a non-volatile storage medium, where the storage medium stores instructions, and the instructions, when executed on an electronic device, cause the electronic device to perform the communication method.

### BRIEF DESCRIPTION OF DRAWINGS

FIG. 1 is a schematic diagram of an architecture of a communication system according to this application;
FIG. 2A is a schematic diagram of a first type of band division according to this application;
FIG. 2B is a schematic diagram of a second type of band division according to this application;
FIG. 2C is a schematic diagram of a third type of band division according to this application;
FIG. 3 is a schematic diagram of an application scenario of a communication method according to an embodiment of this application;
FIG. 4 is a first schematic flowchart of a communication method according to an embodiment of this application;
FIG. 5 is a second schematic flowchart of a communication method according to an embodiment of this application;
FIG. 6 is a third schematic flowchart of a communication method according to an embodiment of this application;
FIG. 7 is a fourth schematic flowchart of a communication method according to an embodiment of this application;
FIG. 8 is a fifth schematic flowchart of a communication method according to an embodiment of this application;
FIG. 9 is a sixth schematic flowchart of a communication method according to an embodiment of this application;
FIG. 10 is a schematic diagram of a logical structure of a terminal device 1000 according to an embodiment of this application;
FIG. 11 is a schematic diagram of a logical structure of a network device 1100 according to an embodiment of this application; and
FIG. 12 is a schematic diagram of a structure of a power control apparatus according to an embodiment of this application.

### DESCRIPTION OF EMBODIMENTS

Illustrative embodiments of this application include, but are not limited to, a communication method, an electronic device, and a storage medium.

Technical solutions provided in this application may be applied to various communication systems that include scenarios of both two operating modes. The two operating modes include a first operating mode and a second operating mode, and the first operating mode and the second operating mode may be respectively two operating modes of a network device. The term "operating mode" herein may also be replaced with "operation mode (operation mode)".

Optionally, the first operating mode may be a non-full duplex mode, and the second operating mode may be a full duplex mode. In various communication systems of a duplex networking scenario, full duplex networking, a 5G NR system, a future evolved system, or a plurality of communication fusion systems are adopted based on the existing communication system. A plurality of application scenarios may be included, and the scenarios may include but are not limited to: a communication scenario between UE and UE, a communication scenario between network devices, a communication scenario between a network device and UE, and the like. The technical solutions provided in the embodiments of this application may also be applied to scenarios such as communication between UE and UE in a 5G communication system, or communication between network devices.

An example in which the first operating mode and the second operating mode are respectively the non-full duplex mode and the non-full duplex mode is used below to describe a communication method and a device provided in the embodiments of this application.

To address challenges of wireless broadband technologies and maintain a leading edge of the 3GPP network, the 3GPP standards group formulates the next generation mobile communication network architecture (next generation system), which is referred to as a 5G network architecture. The architecture not only supports access of wireless technologies (such as LTE) defined in the 3GPP standards group to the 5G core network (5G core network, 5GC), but also supports access of non-3GPP access technologies to the 5GC through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation access gateway (next generation packet data gateway, NG-PDG). A core network function is classified into a user plane function (user plane function, UPF) network element and a control plane function (control plane function, CPF) network element. The UPF is mainly responsible for packet forwarding, quality of service (quality of service, QoS) control, charging information statistics, and the like. The CPF is mainly responsible for user registration and authentication, mobility management, and sending data packet forwarding policies and QoS control policies to the UPF. The CPF can be further classified into an access and mobility management function (access and mobility management function, AMF) and a session management function (session management function, SMF).

A core network device includes, for example, a mobility management entity (mobility management entity, MME), a broadcast multicast service center (broadcast multicast service center, BMSC), or may also include a corresponding function entity in a 5G system, for example, a core network control plane (control plane, CP) or a user plane (user plan, UP) network function such as an SMF and an AMF. The core network control plane may also be understood as a core network control plane function (control plane function, CPF) entity.

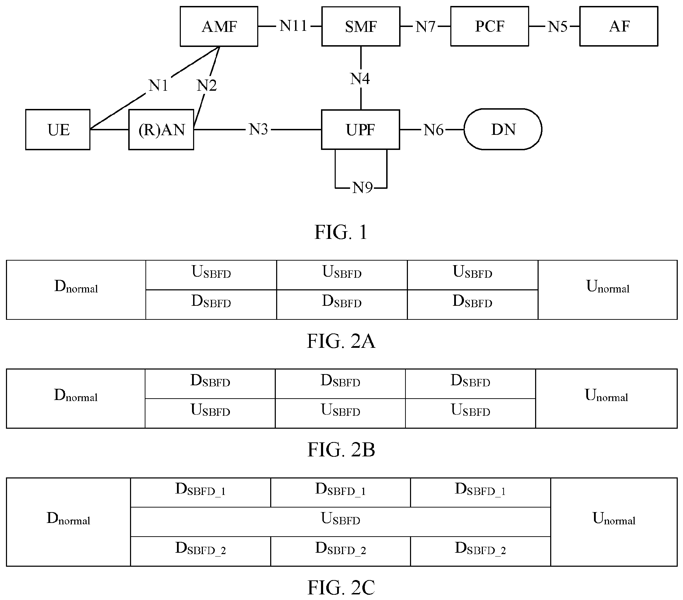

The technical solutions provided in the embodiments of this application may be applied to a system architecture shown in FIG. 1. Functions of user equipment and each network entity are described below.

Radio access network (radio access network, RAN): A network that includes a plurality of 5G-RAN nodes and implements a radio physical layer function, resource scheduling and radio resource management, radio access control, and a mobility management function. The 5G-RAN is connected to the UPF through a user plane interface N3, and is configured to transmit data of a terminal device; and the 5G-RAN establishes a control plane signaling connection to the AMF through a control plane interface N2, to implement functions such as radio access bearer control. The RAN may be any device with a wireless transceiver function, including but not limited to a 5G node base (5G node base, gNB), an evolved node base (evolutional node base, eNB), a wireless access point (wireless access point, WiFi AP), a world interoperability for microwave access base station (world interoperability for microwave access base station, WiMAX BS), a transmission receiving point (transmission receiving point, TRP), a wireless relay node, a wireless backhaul node, and the like.

The access network device (namely, a network device of the access network) in the embodiments of this application may also be a device configured to communicate with the terminal device, and the access network device may be a base transceiver station (base transceiver station, BTS) in a global system of mobile communication (global system of mobile communication, GSM) or code division multiple access (code division multiple access, CDMA), a NodeB (nodeB, NB) in a wideband code division multiple access (wideband code division multiple access, WCDMA) system, an evolved node base (evolutional node base, eNB) in an LTE system, or a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in the embodiments of this application.

In NR, functions of a base station are divided into two parts, referred to as centralized unit (centralized unit, CU)-distributed unit (distributed unit, DU) separation. From the perspective of a protocol stack, the CU includes a radio resource control (radio resource control, RRC) layer and a packet data convergence protocol (packet data convergence protocol, PDCP) layer of the LTE base station, and the DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface for communication between the CU and the DU. From the perspective of functions, the CU is mainly responsible for radio resource control and configuration, inter-cell mobility management, bearer management, and the like. The DU is mainly responsible for scheduling, and generating and sending a physical signal.

The base station may be a macro base station, a micro base station, a pico base station, a small cell, a relay station, a balloon station, or the like.

SMF: It is mainly responsible for a control plane function of terminal device session management, including selection and control of a user plane function (user plane function, UPF), internet protocol (internet protocol, IP) address allocation, QoS management of a session, obtaining a policy and charging control (policy and charging control, PCC) strategy (from the PCF), and the like.

UPF: As an anchor point of a protocol data unit (protocol data unit, PDU) session connection, it is responsible for data packet filtering, data transmission/forwarding, rate control, and charging information generation of the terminal device, and providing a connection to a data network (data network, DN).

PCF: It provides configuration policy information for the terminal device, and provides policy information for managing and controlling the terminal device for a control plane network element (for example, an SMF) of a network; and generates a terminal device access policy and a QoS flow control policy.

AF: It interacts with a network element of the core network to provide some services, for example, interacting with the PCF to perform service policy control, and interacting with the NEF to obtain some network capability information or provide some application information to the network, and provide some data network access point information to the PCF to generate routing information of a corresponding data service.

The terminal device in the embodiments of this application is connected to the RAN device in a wireless manner, and a RAN network element is connected to the 5GC device in a wireless or wired manner. The 5GC device and the RAN network element may be independent and different physical devices, or functions of the 5GC device and logical functions of the RAN network element may be integrated into a same physical device. Alternatively, some functions of the 5GC device and some functions of the RAN network element are integrated into one physical device. The terminal device may be in a fixed position or may be movable.

The 5GC device mainly includes the foregoing PCF network element, SMF network element, UPF network element, and the like.

It should be noted that the foregoing "network element" may also be referred to as an entity, a device, an apparatus, a module, or the like. This is not particularly limited in this application. In addition, in this application, for ease of understanding and description, "network element" is omitted in some descriptions. For example, an NEF network element is referred to as an NEF for short. In this case, the "NEF" should be understood as an NEF network element or an NEF entity, and description of the same or similar situation is omitted below.

It should be noted that a name of each network element included in FIG. 1 is merely a name, and the name constitutes no limitation on a function of the network element. In the 5G network and another future network, the foregoing network elements may also be other names. This is not specifically limited in the embodiments of this application. For example, in a 6G network, some or all of the foregoing network elements may continue to use terms in 5G, or may be other names, which are described herein together and are not described below.

It should be noted that all network elements in FIG. 1 do not necessarily exist at the same time, and a required network element may be determined based on a requirement. A connection relationship between network elements in FIG. 1 is not uniquely determined, and may be adjusted based on a requirement.

It can be understood that the network element or function may be a network element in a hardware device, or may be a software function running on dedicated hardware, or may be a virtualization function instantiated on a platform (for example, a cloud platform).

For ease of understanding of the communication method in the embodiments of this application, technical problems to be resolved in the embodiments of this application are analyzed and explained below.

As described above, in a scenario of FD, subband full duplex (subband non-overlapping full duplex, SBFD) can implement full duplex on a base station side by dividing non-overlapping uplink/downlink subbands in a single carrier, and separately receiving and sending data on the subbands.

In an SBFD scenario, a network device, for example, a base station (gNB, gNodeB), supports a full duplex capability, and can simultaneously send and receive data on a same frequency. Alternatively, the network device supports the SBFD mode, and in the SBFD symbol area, uplink and downlink may exist in different subbands at any time, that is, symbols in the SBFD symbol area may coexist with uplink symbols and downlink symbols. FIG. 2A and FIG. 2B are used as examples. A single carrier is divided into a plurality of subbands. The SBFD symbol area includes an uplink symbol U_{SBFD} corresponding to an uplink subband and a downlink symbol D_{SBFD} corresponding to a downlink subband. As shown in FIG. 2A and FIG. 2B, the uplink symbol U_{SBFD} and the downlink symbol D_{SBFD} may coexist. FIG. 2C is used as an example. A single carrier is divided into a plurality of subbands. The SBFD symbol area includes an uplink symbol U_{SBFD} corresponding to an uplink subband and downlink symbols D_{SBFD_1} and D_{SBFD_2} corresponding to a plurality of downlink subbands. As shown in FIG. 2C, the uplink symbol U_{SBFD} and a plurality of downlink symbols D_{SBFD_1} and D_{SBFD_2} may coexist.

In an SBFD scenario, an SBFD mode is that a terminal device, for example, user equipment (user device, UE), does not have a full duplex capability and communicates with a network device in a TDD manner. That is, all symbols of single UE in the SBFD symbol area can be only one of uplink symbols or downlink symbols. It can be understood that in this SBFD mode, because the UE does not support the full duplex mode, an uplink signal sent by the UE to the network device is not subject to self-interference. Meanwhile, the uplink signal sent by the UE to the network device may be interfered by a downlink signal from the network device. In addition, the uplink signal sent by the UE to the network device may be interfered by a downlink signal from an adjacent network device of the network device, and the uplink signal sent by the UE to the network device may further cause interference to a downlink signal for adjacent UE. The interference is referred to as CLI.

In the SBFD scenario, another SBFD mode is that a terminal device, for example, UE, has a full duplex capability. That is, symbols of single UE in the SBFD symbol area may include uplink symbols and downlink symbols. It can be understood that, in this SBFD mode, an uplink signal sent by the UE to the network device may interfere with receiving of a downlink signal for the UE. Meanwhile, the uplink signal sent by the UE to the network device may be interfered by a downlink signal from the network device. In addition, the uplink signal sent by the UE to the network device may be interfered by a downlink signal from an adjacent network device of the network device, and the uplink signal sent by the UE to the network device may further cause interference to receiving of a downlink signal for adjacent UE. The interference is referred to as CLI.

It should be noted that the full duplex mode in the embodiments of this application is not limited to SBFD. In other embodiments, other full duplex modes such as co-frequency co-time full duplex may be used. This is not limited in this application.

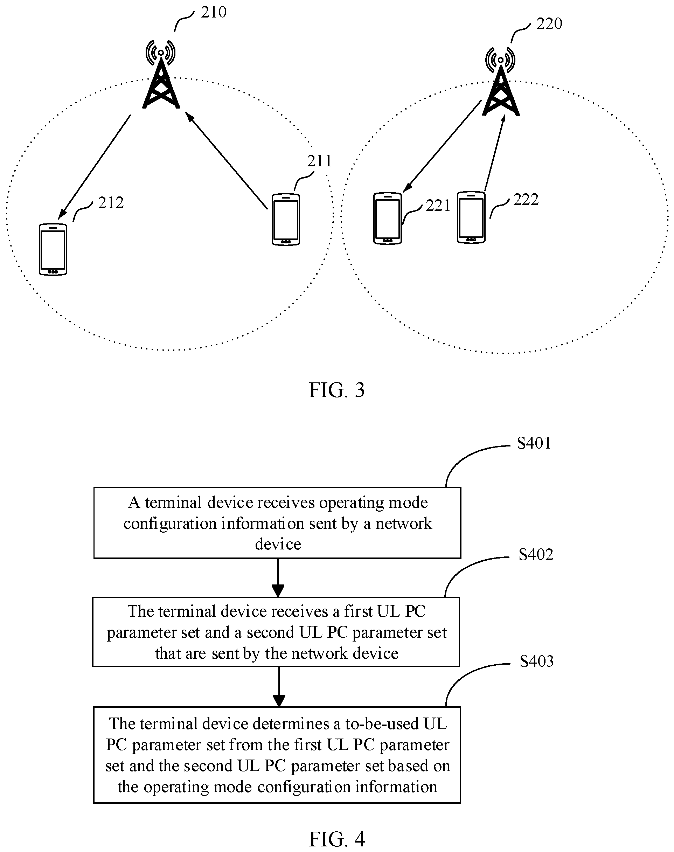

The following describes CLI existing in scenarios of the embodiments of this application with reference to FIG. 3.

Referring to FIG. 3, in a communication system shown in FIG. 3, a network device includes a first base station 210 and a second base station 220, and UE includes a first terminal 211, a second terminal 212, a third terminal 221, and a fourth terminal 222. The first base station 210 is close to the second base station 220. The first terminal 211 and the second terminal 212 belong to a cell managed by an adjacent base station 210, and the third terminal 221 and the fourth terminal 222 belong to a cell managed by the second base station 220. The second terminal 212, the third terminal 221, and the fourth terminal 222 are close to each other.

In the full duplex mode, the base station may configure both a downlink (downlink, DL) subband and an uplink (uplink, UL) subband on one carrier, that is, on a same carrier, some terminals may perform upload transmission, and some terminals may perform downlink transmission within a same time. Alternatively, on a same carrier, a single terminal may perform upload transmission, or may perform downlink transmission within a same time.

In a first embodiment, a downlink signal from the second base station 220 to the third terminal 221 causes adjacent channel interference to an uplink signal received by the first base station 210 from the first terminal 211.

In a second embodiment, a downlink signal from the first base station 210 to the second terminal 212 causes co-channel interference to an uplink signal received by the first base station 210 from the first terminal 211.

In a third embodiment, an uplink signal from the first terminal 211 to the first base station 210 causes CLI to a downlink signal received by the third terminal 221 from the second base station 220. In addition, an uplink signal from the fourth terminal 222 to the second base station 220 also causes adjacent channel interference to a downlink signal received by the third terminal 221 from the second base station 220.

For an uplink signal sent from the first terminal 211 to the first base station 210, when CLI caused by another link exists, for example, in the scenario of the first embodiment or the second embodiment, to ensure transmission quality of the sent signal, an uplink transmit power needs to be appropriately increased. In addition, when CLI may be caused to other links, for example, in the scenario of the third embodiment, to reduce interference caused to other links, the uplink transmit power needs to be appropriately reduced. Therefore, in the full duplex mode, a power on a specific resource needs to be precisely controlled to minimize an impact of the CLI on the system.

Based on the foregoing problem, this application provides a communication method. A network device configures two uplink power control parameter sets for a terminal device, which are respectively a first uplink power control (uplink power control, UL PC) parameter set for a full duplex mode and a second UL PC parameter set for a non-full duplex mode. The terminal device may determine, in real time, whether an operating mode of the network device is the full duplex mode, to select a corresponding power control parameter, thereby implementing uplink transmission power control in a full duplex networking scenario.

In an embodiment, the terminal device may control a transmit power of an uplink signal based on whether the network device is in the full duplex mode. For example, the network device having the full duplex capability sends a configuration message or indication information to the terminal device, to assist the terminal device in determining an operating mode corresponding to a to-be-sent signal, specifically, determining an operating mode of a network device corresponding to a time-frequency location of the to-be-sent signal, so that the terminal device may control the transmit power of the uplink signal based on the determined operating mode.

For example, in an optional implementation, the network device sends operating mode configuration information of the full duplex mode to the terminal device. The terminal device may determine, based on the operating mode configuration information of the full duplex mode, whether the to-be-sent signal corresponds to the full duplex mode. The operating mode configuration information includes time-frequency domain location information and uplink and downlink information, for example, includes operating modes of an uplink signal at each time domain location and frequency domain location. If the terminal device determines, based on the operating mode configuration information, that the to-be-sent signal corresponds to the full duplex mode, the first UL PC parameter set for the full duplex mode is used to determine the uplink transmit power of the to-be-sent signal; and if the terminal device determines, based on the operating mode configuration information, that the to-be-sent signal corresponds to the non-full duplex mode, the second UL PC parameter set for the non-full duplex mode is used to determine the uplink transmit power of the to-be-sent signal.

In an optional implementation, the network device may send power control indication information to the terminal device. For example, the power control indication information is carried in downlink control information (downlink control information, DCI), and one or more fields in the DCI indicate that the first UL PC parameter set or the second UL PC parameter set is used. The terminal device may determine, based on the power control indication information, a parameter set in the first UL PC parameter set for the full duplex mode and the second UL PC parameter set for the non-full duplex mode to be used. If it is determined to use the first UL PC parameter set, the uplink transmit power of the to-be-sent signal is determined by using the first UL PC parameter set; and if it is determined to use the second UL PC parameter set, the uplink transmit power of the to-be-sent signal is determined by using the second UL PC parameter set. It should be noted that the indication of the operating mode by using the DCI is merely an example. In other embodiments, another configuration information or indication message may be used to indicate the operating mode to the terminal device. This is not limited by this application.

In an optional implementation, the terminal device measures a measurement quantity of a specific subband, and determines, based on a measurement result, whether corresponds to the full duplex mode. Optionally, if the measurement result is less than or equal to a measurement threshold, it is considered that the to-be-sent signal does not correspond to the full duplex mode, and the first UL PC parameter set for the full duplex mode is used to determine the uplink transmit power of the to-be-sent signal; and if the measurement result is greater than the measurement threshold, it is considered that the to-be-sent signal corresponds to the full duplex mode, and the second UL PC parameter set for the non-full duplex mode is used to determine the uplink transmit power of the to-be-sent signal. In an example, the specific subband is a subband of the to-be-sent signal. If the measurement result is less than or equal to the measurement threshold, it indicates that the subband is not subjected to downlink interference from an adjacent subband, and it is considered that the to-be-sent signal corresponds to the non-full duplex mode. Otherwise, it is considered that the to-be-sent signal corresponds to the full duplex mode. A measurement parameter may include at least one of a synchronization signal reference signal received power (synchronization signal reference signal received power, SS-RSRP), a channel state information reference signal received power (channel state information reference signal received power, CSI-RSRP), a sounding reference signal reference signal received power (sounding reference signal reference signal received power, SRS-RSRP), a received signal strength indicator (received signal strength indication, RSSI), and a cross link interference received signal strength indicator (cross link interference received signal strength indicator, CLI-RSSI). It should be noted that the specific subband is a subband of the to-be-sent signal is merely an example, and that a corresponding operating mode is considered based on the measurement result is also merely an example. In other embodiments, another subband may be measured, and the operating mode is determined based on the measurement result in another manner. This is not limited in this application.

In an example, the operating mode configuration information may enable the terminal device to learn of the operating mode corresponding to the to-be-sent signal, to calculate the uplink transmit power by using different parameters based on different operating modes. Correspondingly, an embodiment of this application provides a communication method, which is applied to a terminal device in a communication system shown in FIG. 1. Optionally, the terminal device may be UE. As shown in FIG. 4, the method may include S401-S403.

S401: A terminal device receives operating mode configuration information sent by a network device.

In an optional implementation, the operating mode configuration information includes time-frequency resource configuration information of an operating mode, and the time-frequency resource configuration information of the operating mode indicates the terminal device to determine, based on the time-frequency resource configuration information, an operating mode corresponding to a time-frequency resource of a to-be-sent uplink signal. For example, the time-frequency resource configuration information includes time-frequency domain location information and uplink and downlink information. Specifically, for data transmission in each time-frequency domain unit, different uplink and downlink information may exist.

It can be understood that the operating mode in this embodiment of this application is the operating mode of the network device, and includes a non-full duplex mode and a full duplex mode.

In an example, a time domain location is divided into individual slots based on a time domain unit, for example, divided into slot 1 and slot 2; and a frequency domain location is divided into individual frequency domain resources based on a frequency domain unit, for example, divided into frequency domain resource 1 and frequency domain resource 2. Uplink and downlink information of different bands in a same slot may be uplink, downlink, or uplink and downlink respectively. For example, uplink and downlink information of frequency domain resource 1 in slot 1 is uplink, and uplink and downlink information of frequency domain resource 2 in slot 1 is downlink. It indicates that uplink and downlink information of different bands in the same slot is uplink and downlink respectively. Because both uplink and downlink subbands exist, slot 1 corresponds to the full duplex mode.

Optionally, each terminal device may correspond to one frequency domain resource in the time-frequency resource configuration information, and each frequency domain resource in the time-frequency resource configuration information corresponds to a plurality of slots. Therefore, the time-frequency resource configuration information configures uplink and downlink information of each slot for the terminal device. For example, uplink and downlink information of the frequency domain resource corresponding to the terminal device in each slot may include a silent state, uplink, or downlink. It can be understood that, in the silent state, uplink or downlink transmission is not performed at a corresponding location. For example, frequency domain resource 1 represents a subband used for communication between the network device and the terminal device, and uplink and downlink information of frequency domain resource 1 in slot 1 is silent; and uplink and downlink information of frequency domain resource 1 in slot 2 is uplink.

Optionally, the time domain unit includes any one of a super frame, a system frame, a subframe, a slot, a mini-slot, a mini-slot (mini-slot), and an orthogonal frequency division multiplexing OFDM symbol, or includes any combination of a super frame, a system frame, a subframe, a slot, a mini-slot, and an orthogonal frequency division multiplexing OFDM symbol. The time domain unit is not limited in this application.

Optionally, the frequency domain unit includes any one of a control channel element (control channel element, CCE), a control resource set (control resource set, CORSET), a physical resource block (physical resource block, PRB), a bandwidth part (band width partial, BWP), or a subcarrier. The frequency domain unit is not limited in this application.

In an optional implementation, the operating mode configuration information includes operating mode indication information, and the operating mode indication information indicates the terminal device to determine an operating mode corresponding to a to-be-sent signal.

Optionally, the operating mode indication information includes indication information of the non-full duplex mode and indication information of the full duplex mode. The indication information of the non-full duplex mode indicates that a signal to be sent by the terminal device corresponds to the non-full duplex mode; and the indication information of the full duplex mode indicates that a signal to be sent by the terminal device corresponds to the full duplex mode.

S402: The terminal device receives a first UL PC parameter set and a second UL PC parameter set that are sent by the network device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

Optionally, the first UL PC parameter set or the second UL PC parameter set includes at least one parameter of an uplink channel or an uplink signal. The uplink channel includes at least one of a physical uplink shared channel (physical uplink shared channel, PUSCH), a physical uplink control channel (physical uplink control channel, PUCCH), and a physical random access channel (packet random access channel, PRACH), and the uplink signal includes a sounding reference signal (sounding reference signal, SRS).

In an optional embodiment, types of parameters included in the first UL PC parameter set and the second UL PC parameter set are consistent.

For example, for each parameter type, a value of the parameter type in the first UL PC parameter set is lower than a value of the parameter type in the second UL PC parameter set. That is, the uplink transmit power calculated based on the first UL PC parameter set is configured to be lower than that calculated based on the second UL PC parameter set.

For another example, for each parameter type, a value of the parameter type in the first UL PC parameter set is higher than a value of the parameter type in the second UL PC parameter set. That is, the uplink transmit power calculated based on the first UL PC parameter set is configured to be higher than that calculated based on the second UL PC parameter set.

In an optional embodiment, the first UL PC parameter set and the second UL PC parameter set include a first parameter type positively related to the uplink transmit power and a second parameter type negatively related to the uplink transmit power. It can be understood that the larger the parameter of the first parameter type is, the greater the calculated uplink transmit power is; and the larger the parameter of the second parameter type is, the smaller the calculated uplink transmit power is.

For example, for each first parameter type, a value of the parameter type in the first UL PC parameter set is lower than a value of the parameter type in the second UL PC parameter set; and for each second parameter type, a value of the parameter type in the first UL PC parameter set is higher than a value of the parameter type in the second UL PC parameter set. That is, the uplink transmit power calculated based on the first UL PC parameter set is configured to be lower than that calculated based on the second UL PC parameter set.

For another example, for each first parameter type, a value of the parameter type in the first UL PC parameter set is higher than a value of the parameter type in the second UL PC parameter set; and for each second parameter type, a value of the parameter type in the first UL PC parameter set is lower than a value of the parameter type in the second UL PC parameter set. That is, the uplink transmit power calculated based on the first UL PC parameter set is configured to be higher than that calculated based on the second UL PC parameter set.

The following describes optional implementations of a PUSCH parameter included in the first UL PC parameter set or the second UL PC parameter set.

The 3rd generation partnership project (3rd generation partnership project, 3GPP) defines a power control formula for a PUSCH channel in section 7.1.1 of the TS 38.331 protocol, to calculate uplink transmission powers of the terminal device for PUSCH information transmission in BWP b, cell c, carrier f, and subframe i. The specific descriptions are as follows: ${P}_{PUSCH , b , f , c} \left(i, j, {q}_{d}, l\right) = min \left\{\begin{matrix}{P}_{CMAX , f , c} \left(i\right) , \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{f , b , c} \left(i, l\right)\end{matrix}\right\}$

Optionally, the PUSCH parameter included in the first UL PC parameter set or the second UL PC parameter set includes P_{O_PUSCH, b, f, c}(j) and α_{b,f,c}(j). b represents a BWP, c represents a cell, f represents a carrier, i represents a subframe, and j represents an index of a configuration parameter. Optionally, P_{O_PUSCH, b, f, c}(j) = P_{O_NOMINAL,} P_{USCH, f, c}(j) + P_{O_UE_PUSCH, b, f, c}(j). For specific content of P_{O_PUSCH, b, f, c}(j) and α_{b,f,c}(j), refer to definitions of the 3GPP in the TS 38.213 protocol. Details are not described herein again.

Optionally, the PUSCH parameter included in the first UL PC parameter set or the second UL PC parameter set includes p0-Nominal, p0, P0-PUSCH-Alpha, deltaPreamble, and msg3-DeltaPreamble. For specific content of p0-Nominal, p0, P0-PUSCH-Alpha, deltaPreamble, and msg3-DeltaPreamble, refer to definitions of the 3GPP in the TS 38.331 protocol. Details are not described herein again.

It can be understood that the terminal device may calculate, based on the PUSCH parameter, uplink transmit powers of the terminal device for PUSCH information transmission in BWP b, cell c, carrier f, and subframe i.

Optionally, a value of each PUSCH parameter in the first UL PC parameter set is lower than a value of a parameter of a same type in the second UL PC parameter set. For example, a value of P_{O_PUSCH, b, f, c}(j) in the first UL PC parameter set is lower than a value of P_{O_PUSCH, b, f, c}(j) in the second UL PC parameter set.

Optionally, a value of each PUSCH parameter in the first UL PC parameter set is higher than a value of a parameter of a same type in the second UL PC parameter set. For example, a value of P_{O_PUSCH, b, f, c}(j) in the first UL PC parameter set is higher than a value of P_{O_PUSCH, b, f, c}(j) in the second UL PC parameter set.

The following describes optional implementations of a PUCCH parameter included in the first UL PC parameter set or the second UL PC parameter set.

The 3GPP defines a power control formula for a PUCCH channel in section 7.2.1 of the TS 38.331 protocol, to calculate uplink transmission powers of the terminal device for PUCCH information transmission in BWP b, cell c, carrier f, and subframe i. The specific descriptions are as follows: ${P}_{PUCCH , b , f , c} \left(i, {q}_{u}, {q}_{d}, l\right) = min \left\{\begin{matrix}{P}_{CMAX , f , c} \left(i\right) , \\ {P}_{O_PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) + {Δ}_{F_PUCCH} \left(F\right) + {Δ}_{TF , b , f , c} \left(i\right) + {g}_{b , f , c} \left(i, l\right)\end{matrix}\right\}$

Optionally, the PUCCH parameter included in the first UL PC parameter set or the second UL PC parameter set includes P_{O_PUCCH, b, f, c}(qᵤ). b represents a BWP, c represents a cell, f represents a carrier, i represents a subframe, and qᵤ represents an index of a configuration parameter. For specific content of P_{O_PUCCH, b, f, c}(qᵤ), refer to definitions of the 3GPP in the TS 38.213 protocol. Details are not described herein again.

Optionally, the PUCCH parameter included in the first UL PC parameter set or the second UL PC parameter set includes p0-PUCCH. For specific content of p0-PUCCH, refer to definitions of the 3GPP in the TS 38.331 protocol. Details are not described herein again.

It can be understood that the terminal device may calculate, based on the PUSCH parameter, uplink transmit powers of the terminal device for PUCCH information transmission in BWP b, cell c, carrier f, and subframe i.

Optionally, a value of each PUCCH parameter in the first UL PC parameter set is lower than a value of a parameter of a same type in the second UL PC parameter set. For example, a value of P_{O_PUCCH, b, f, c}(qᵤ) in the first UL PC parameter set is lower than a value of P_{O_PUCCH, b, f, c}(qᵤ) in the second UL PC parameter set.

Optionally, a value of each PUCCH parameter in the first UL PC parameter set is higher than a value of a parameter of a same type in the second UL PC parameter set. For example, a value of P_{O_PUCCH, b, f, c}(qᵤ) in the first UL PC parameter set is higher than a value of P_{O_PUCCH, b, f, c}(qᵤ) in the second UL PC parameter set.

The following describes optional implementations of a PRACH parameter included in the first UL PC parameter set or the second UL PC parameter set.

The 3GPP defines a power control formula for a PRACH channel in section 7.4 of the TS 38.331 protocol, to calculate uplink transmission powers of the terminal device for PUCCH information transmission in BWP b, cell c, carrier f, and subframe i. The specific descriptions are as follows: ${P}_{PRACH , b , f , c} \left(i\right) = min \left\{{P}_{CMAX , f , c}\left(i\right),{P}_{PRACH , target , f , c}+{PL}_{b , f , c}\right\}$

Optionally, the PRACH parameter included in the first UL PC parameter set or the second UL PC parameter set includes PREAMBLE_RECEIVED_TARGET_POWER.

For specific content of PREAMBLE_RECEIVED_TARGET_POWER, refer to definitions of the 3GPP in the TS 38.321 protocol. Details are not described herein again.

Optionally, the PRACH parameter included in the first UL PC parameter set or the second UL PC parameter set includes preambleReceivedTargetPower and powerRampingStep. For specific content of preambleReceivedTargetPower and powerRampingStep, refer to definitions of the 3GPP in the TS 38.331 protocol. Details are not described herein again.

Optionally, the PRACH parameter included in the first UL PC parameter set or the second UL PC parameter set includes P_{PRACH,target,f,c}. c represents a cell, and f represents a carrier. For P_{PRACH,target,f,c}, refer to definitions of the 3GPP in the TS 38.213 protocol. Details are not described herein again.

It can be understood that the terminal device may calculate, based on the PRACH parameter, uplink transmit powers of the terminal device for PRACH information transmission in BWP b, cell c, carrier f, and subframe i.

Optionally, a value of each PRACH parameter in the first UL PC parameter set is lower than a value of a parameter of a same type in the second UL PC parameter set. For example, a value of P_{PRACH,target,f,c} in the first UL PC parameter set is lower than a value of P_{PRACH,target,f,c} in the second UL PC parameter set.

Optionally, a value of each PRACH parameter in the first UL PC parameter set is higher than a value of a parameter of a same type in the second UL PC parameter set. For example, a value of P_{PRACH,target,f,c} in the first UL PC parameter set is higher than a value of P_{PRACH,target,f,c} in the second UL PC parameter set.

The following describes optional implementations of an SRS parameter included in the first UL PC parameter set or the second UL PC parameter set.

The 3GPP defines a power control formula for an SRS in section 7.3.1 of the TS 38.331 protocol, to calculate uplink transmission powers of the terminal device for PUCCH information transmission in BWP b, cell c, carrier f, and subframe i. The specific descriptions are as follows: ${P}_{SRS , b , f , c} \left(i, {q}_{s}, l\right) = min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\}$

Optionally, the SRS parameter included in the first UL PC parameter set or the second UL PC parameter set includes P_{O_SRS, b, f, c}(qₛ) and α_{SRS, b, f, c}(qₛ) . b represents a BWP, c represents a cell, f represents a carrier, i represents a subframe, and qₛ represents an index of a configuration parameter. For P_{O_SRS, b, f, c}(qₛ) and α_{SRS,} b, f, _{c}(qₛ), refer to definitions of the 3GPP in the TS 38.213 protocol. Details are not described herein again.

It can be understood that the terminal device may calculate, based on the SRS parameter, uplink transmit powers of the terminal device for SRS information transmission in BWP b, cell c, carrier f, and subframe i.

Optionally, a value of each SRS parameter in the first UL PC parameter set is lower than a value of a parameter of a same type in the second UL PC parameter set. For example, a value of P_{O_SRS, b, f, c}(qₛ) in the first UL PC parameter set is lower than a value of P_{O_SRS,} b, _{f, c}(qₛ) in the second UL PC parameter set.

Optionally, a value of each SRS parameter in the first UL PC parameter set is higher than a value of a parameter of a same type in the second UL PC parameter set. For example, a value of P_{O_SRS, b, f, c}(qₛ) in the first UL PC parameter set is higher than a value of P_{O_SRS, b, f, c}(qₛ) in the second UL PC parameter set.

S403: The terminal device determines a to-be-used UL PC parameter set from the first UL PC parameter set and the second UL PC parameter set based on the operating mode configuration information.

It can be understood that the to-be-used UL PC parameter set determined by the terminal device may be used to calculate the uplink transmit power of the to-be-sent uplink signal.

In an optional embodiment, after determining to use the first UL PC parameter set, the terminal device calculates a first uplink transmit power of the to-be-sent uplink signal based on the first UL PC parameter set, and transmits the to-be-sent uplink signal to the network device at the first uplink transmit power.

In an optional embodiment, after determining to use the second UL PC parameter set, the terminal device calculates a second uplink transmit power of the to-be-sent uplink signal based on the second UL PC parameter set, and transmits the to-be-sent uplink signal to the network device at the second uplink transmit power.

In the foregoing implementation in which the operating mode configuration information includes the time-frequency resource configuration information of the operating mode, the terminal device may determine, based on the time-frequency resource configuration information, the operating mode corresponding to the time-frequency resource of the to-be-sent uplink signal, and use the UL PC parameter set corresponding to the operating mode. It can be understood that the operating mode is one of the non-full duplex mode and the full duplex mode, and the UL PC parameter set is one of the first UL PC parameter set and the second UL PC parameter set. In this embodiment, step S403 may include step S4031 and step S4033.

S4031: When the terminal device determines, based on the time-frequency resource configuration information, that the to-be-sent signal corresponds to the time-frequency region of the non-full duplex mode, it is determined to use the first UL PC parameter set.

It can be understood that the time-frequency resource configuration information includes uplink and downlink information of each time domain resource and each frequency domain resource, for example, includes uplink and downlink information of a frequency domain resource corresponding to the terminal device, and other frequency domain resources in each slot.

Optionally, in a slot in which the to-be-sent signal is located, if uplink and downlink information of the frequency domain resource corresponding to the terminal device is consistent with that of other frequency domain resources of a carrier on which the terminal device is located, for example, both are UL, it is determined that the to-be-sent signal corresponds to the time-frequency region of the non-full duplex mode, and it is determined to use the first UL PC parameter set.

S4033: When the terminal device determines, based on the time-frequency resource configuration information, that the to-be-sent signal corresponds to the time-frequency region of the full duplex mode, it is determined to use the second UL PC parameter set.

Optionally, in a slot in which the to-be-sent signal is located, if uplink and downlink information of the frequency domain resource corresponding to the terminal device and other frequency domain resources of the carrier on which the terminal device is located include uplink and downlink, for example, one is UL, and the other is DL, it is determined that the to-be-sent signal corresponds to the time-frequency region of the full duplex mode, and it is determined to use the second UL PC parameter set.

Through step S4031 and step S4033, the terminal device may directly determine, based on the time-frequency resource configuration information, the operating mode corresponding to the to-be-sent signal. Optionally, the time-frequency resource configuration information may be configuration information in a period of time and cover a plurality of slots. Therefore, the terminal device may determine, based on the time-frequency resource configuration information, an operating mode of a to-be-sent uplink signal in the plurality of slots, to determine a UL PC parameter set used for calculating an uplink transmit power in the plurality of slots.

In the foregoing implementation in which the operating mode configuration information includes the operating mode indication information, the terminal device may determine, based on the operating mode indication information, the operating mode corresponding to the to-be-sent signal, and use the UL PC parameter set corresponding to the operating mode. It can be understood that the operating mode is one of the non-full duplex mode and the full duplex mode, and the UL PC parameter set is one of the first UL PC parameter set and the second UL PC parameter set. In this embodiment, step S403 may include step S4032 and step S4034.

S4032: When the terminal device determines to operate in the non-full duplex mode based on the operating mode indication information, it is determined to use the first UL PC parameter set.

It can be understood that the operating mode indication information includes indication information of the non-full duplex mode and indication information of the full duplex mode. The indication information of the non-full duplex mode indicates that a signal to be sent by the terminal device corresponds to the non-full duplex mode.

Optionally, the terminal device may determine to use the first UL PC parameter set based on that the operating mode indication information is the indication information of the non-full duplex mode.

S4034: When the terminal device determines to operate in the full duplex mode based on the operating mode indication information, it is determined to use the second UL PC parameter set.

It can be understood that the operating mode indication information includes indication information of the non-full duplex mode and indication information of the full duplex mode. The indication information of the full duplex mode indicates that a signal to be sent by the terminal device corresponds to the full duplex mode.

Optionally, the terminal device may determine to use the second UL PC parameter set based on that the operating mode indication information is the indication information of the full duplex mode.

Through step S4032 and step S4034, the terminal device may directly determine, based on the operating mode indication information, the operating mode corresponding to the to-be-sent signal. Optionally, the operating mode indication information may indicate an operating mode in a period of time and cover a plurality of slots. Therefore, the terminal device may determine, based on the operating mode indication information, an operating mode of a to-be-sent uplink signal in the plurality of slots, to determine a UL PC parameter set used for calculating an uplink transmit power in the plurality of slots.

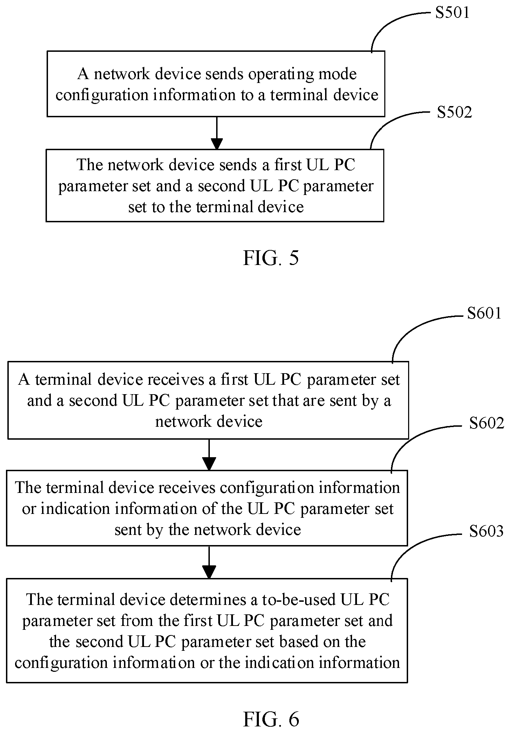

Correspondingly, an embodiment of this application provides a communication method, which is applied to a network device in a communication system shown in FIG. 1. Optionally, the network device may be a base station. As shown in FIG. 5, the method may include S501-S502.

S501: A network device sends operating mode configuration information to a terminal device.

In an optional implementation, the operating mode configuration information includes time-frequency resource configuration information of the operating mode. For the time-frequency resource configuration information of the operating mode, refer to the foregoing description with reference to FIG. 4. Details are not described herein again.

In an optional implementation, the operating mode configuration information includes operating mode indication information. For the operating mode indication information, refer to the foregoing description with reference to FIG. 4. Details are not described herein again.

S502: The network device sends a first UL PC parameter set and a second UL PC parameter set to the terminal device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

Optionally, the network device may configure a parameter in the first UL PC parameter set based on an absolute value.

Optionally, the network device may configure a parameter in the second UL PC parameter set based on an offset value, for example, configure the parameter in the second UL PC parameter set based on a relative value or an offset value of a corresponding parameter in the first UL PC parameter set.

In an optional implementation, the network device may detect a transmission status of a communication system, and configure the first UL PC parameter set and the second UL PC parameter set based on a detection result.

For example, if the detection result indicates that CLI is large, the network device may configure a power value calculated by using a parameter in the second UL PC parameter set to be greater than a power value calculated by using a parameter in the first UL PC parameter set, thereby increasing an uplink transmit power in the full duplex mode, to suppress the CLI that is being subjected to.

For another example, if the detection result indicates that a target terminal device has large interference to another terminal device, the network device may configure a power value calculated by using a parameter in the second UL PC parameter set to be smaller than a power value calculated by using a parameter in the first UL PC parameter set, thereby reducing an uplink transmit power in the full duplex mode, to reduce interference of the target terminal device to another terminal device.

For other content such as specific parameters of the first UL PC parameter set and the second UL PC parameter set, refer to the foregoing description with reference to FIG. 4. Details are not described herein again.

In an example, which UL PC parameter set is used by the terminal device may be directly dynamically indicated to the terminal device by using the configuration information or the indication information, and the terminal device does not need to determine a time-frequency domain location or an operating mode. Correspondingly, an embodiment of this application provides a communication method, which is applied to a terminal device in a communication system shown in FIG. 1. Optionally, the terminal device is UE. As shown in FIG. 6, the method may include S601-S602.

S601: A terminal device receives a first up UL PC parameter set and a second UL PC parameter set that are sent by a network device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

For specific content of the first UL PC parameter set and the second UL PC parameter set, refer to the foregoing description with reference to FIG. 4. Details are not described herein again.

S602: The terminal device receives configuration information or indication information of the UL PC parameter set sent by the network device.

In an optional implementation, the terminal device may receive the configuration information of the UL PC parameter set sent by the network device. The configuration information of the UL PC parameter set indicates the UL PC parameter set used by the terminal device, for example, indicates the first UL PC parameter set used by the terminal device, or indicates the second UL PC parameter set used by the terminal device.

The configuration information of the UL PC parameter set may include configuration information of the first UL PC parameter set or configuration information of the second UL PC parameter set.

Optionally, a manner of sending the configuration information of the UL PC parameter set includes one of a system information block (system information block, SIB), RRC signaling, and MAC-CE signaling.

In an optional implementation, the terminal device may receive the indication information of the UL PC parameter set sent by the network device. The indication information of the UL PC parameter set indicates the UL PC parameter set used by the terminal device, for example, indicates the first UL PC parameter set used by the terminal device, or indicates the second UL PC parameter set used by the terminal device.

The indication information of the UL PC parameter set may include indication information of the first UL PC parameter set or indication information of the second UL PC parameter set.

Optionally, a manner of sending the indication information of the UL PC parameter set includes one of RRC signaling, MAC-CE signaling, DCI, and a random access response (Random Access Response, RAR).

Optionally, in an implementation in which the indication information is sent based on the DCI, the following five solutions may be used for a field in which the indication information in the DCI is located.

In a first solution, a specific state of a field "SRS resource set indicator" in the DCI indicates the first UL PC parameter set or the second UL PC parameter set.

For example, if the field "SRS resource set indicator" is a first value, it indicates the first UL PC parameter set; and if the field "SRS resource set indicator" is a second value, it indicates the second UL PC parameter set.

In a second solution, a specific state of a field "SRS resource indicator" in the DCI indicates the first UL PC parameter set or the second UL PC parameter set.

For example, if the field "SRS resource indicator" is a first value, it indicates the first UL PC parameter set; and if the field "SRS resource indicator" is a second value, it indicates the second UL PC parameter set.

In a third solution, a specific state of a field "Open-loop power control parameter set indication" in the DCI indicates the first UL PC parameter set or the second UL PC parameter set.

For example, if the field "Open-loop power control parameter set indication" is a first value, it indicates the first UL PC parameter set; and if the field "Open-loop power control parameter set indication" is a second value, it indicates the second UL PC parameter set.

In a fourth solution, a new field in the DCI indicates the first UL parameter set and the second UL parameter set.

For example, a first field is added to the DCI. If the first field is a first value, it indicates the first UL PC parameter set; and if the first field is a second value, it indicates the second UL PC parameter set.

In a fifth solution, in the fields corresponding to the foregoing four solutions, two or more fields jointly indicate the first UL PC parameter set and the second UL PC parameter set.

For example, if the field "SRS resource set indicator" is a first value, and the field "SRS resource indicator" is a second value, it indicates the first UL PC parameter set; and if the field "SRS resource set indicator" is a third value, and the field "SRS resource indicator" is a fourth value, it indicates the second UL PC parameter set.

For another example, a first field and a second field are added to the DCI. If the first field is a first value, and the second field is a second value, it indicates the first UL PC parameter set; and if the first field is a third value, and the second field is a fourth value, it indicates the second UL PC parameter set.

It can be understood that the foregoing descriptions are merely two examples. In another optional embodiment, another field combination manner may be used.

S603: The terminal device determines a to-be-used UL PC parameter set from the first UL PC parameter set and the second UL PC parameter set based on the configuration information or the indication information.

It can be understood that the to-be-used UL PC parameter set determined by the terminal device may be used to calculate the uplink transmit power of the to-be-sent uplink signal.

In an optional embodiment, after determining to use the first UL PC parameter set, the terminal device calculates a first uplink transmit power of the to-be-sent uplink signal based on the first UL PC parameter set, and transmits the to-be-sent uplink signal to the network device at the first uplink transmit power.

In an optional embodiment, after determining to use the second UL PC parameter set, the terminal device calculates a second uplink transmit power of the to-be-sent uplink signal based on the second UL PC parameter set, and transmits the to-be-sent uplink signal to the network device at the second uplink transmit power.

In an optional implementation, the used UL PC parameter set may be determined based on the configuration information. It can be understood that this implementation corresponds to the foregoing implementation in which the terminal device receives the configuration information of the UL PC parameter set sent by the network device.

Optionally, when the configuration information is configuration information of the first UL PC parameter set, it is determined to use the first UL PC parameter set.

Optionally, when the configuration information is configuration information of the second UL PC parameter set, it is determined to use the second UL PC parameter set.

In an optional implementation, the used UL PC parameter set may be determined based on the indication information. It can be understood that this implementation corresponds to the foregoing implementation in which the terminal device receives the indication information of the UL PC parameter set sent by the network device.

Optionally, when the indication information is indication information of the first UL PC parameter set, it is determined to use the first UL PC parameter set.

Optionally, when the indication information is indication information of the second UL PC parameter set, it is determined to use the second UL PC parameter set.

Optionally, in an implementation in which the indication information is sent based on the DCI, the following five methods may be used to obtain the indication information from a specific field in the DCI. For the field in which the indication information in the DCI is located, refer to the foregoing description of step S602. Details are not described herein again.

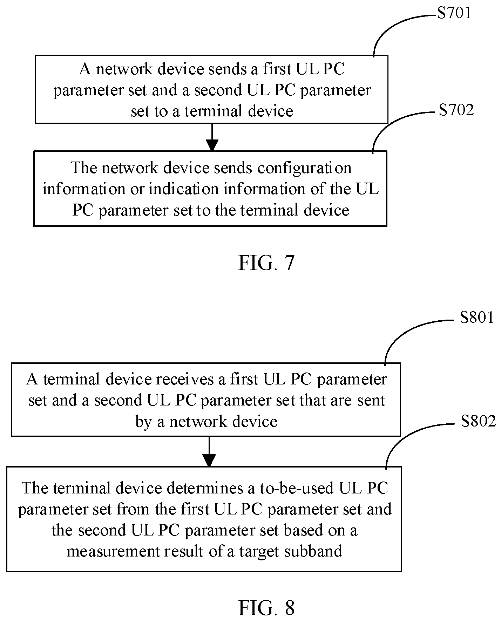

Correspondingly, an embodiment of this application provides a communication method, which is applied to a communication system shown in FIG. 1. Specifically, the method is applied to a network device. As shown in FIG. 7, the method may include S701-S702.

S701: A network device sends a first UL PC parameter set and a second UL PC parameter set to a terminal device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

For specific content of the first UL PC parameter set and the second UL PC parameter set, refer to the foregoing description with reference to FIG. 4. Details are not described herein again.

S702: The network device sends configuration information or indication information of the UL PC parameter set to the terminal device.

In an optional implementation, the network device may send the configuration information of the UL PC parameter set to the terminal device. The configuration information of the UL PC parameter set indicates the UL PC parameter set used by the terminal device, for example, indicates the first UL PC parameter set used by the terminal device, or indicates the second UL PC parameter set used by the terminal device.

The configuration information of the UL PC parameter set may include configuration information of the first UL PC parameter set or configuration information of the second UL PC parameter set.

Optionally, a manner of sending the configuration information of the UL PC parameter set includes one of a system information block SIB, RRC signaling, and MAC CE signaling.

In an optional implementation, the network device may send indication information of the UL PC parameter set to the terminal device. The indication information of the UL PC parameter set indicates the UL PC parameter set used by the terminal device, for example, indicates the first UL PC parameter set used by the terminal device, or indicates the second UL PC parameter set used by the terminal device.

The indication information of the UL PC parameter set may include indication information of the first UL PC parameter set or indication information of the second UL PC parameter set.

Optionally, a manner of sending the indication information of the UL PC parameter set includes one of RRC signaling, MAC-CE signaling, DCI, and an RAR.

Optionally, in an implementation in which the indication information is sent based on the DCI, the following five indication solutions are used in the DCI.

In a first solution, a specific state of a field "SRS resource set indicator" in the DCI indicates the first UL PC parameter set or the second UL PC parameter set.

For example, if the field "SRS resource set indicator" is a first value, it indicates the first UL PC parameter set; and if the field "SRS resource set indicator" is a second value, it indicates the second UL PC parameter set.

In a second solution, a specific state of a field "SRS resource indicator" in the DCI indicates the first UL PC parameter set or the second UL PC parameter set.

For example, if the field "SRS resource indicator" is a first value, it indicates the first UL PC parameter set; and if the field "SRS resource indicator" is a second value, it indicates the second UL PC parameter set.

In a third solution, a specific state of a field "Open-loop power control parameter set indication" in the DCI indicates the first UL PC parameter set or the second UL PC parameter set.

For example, if the field "Open-loop power control parameter set indication" is a first value, it indicates the first UL PC parameter set; and if the field "Open-loop power control parameter set indication" is a second value, it indicates the second UL PC parameter set.

In a fourth solution, a new field in the DCI indicates the first UL parameter set and the second UL parameter set.

For example, a first field is added to the DCI. If the first field is a first value, it indicates the first UL PC parameter set; and if the first field is a second value, it indicates the second UL PC parameter set.

In a fifth solution, in the fields corresponding to the foregoing four solutions, two or more fields jointly indicate the first UL PC parameter set and the second UL PC parameter set.

For example, if the field "SRS resource set indicator" is a first value, and the field "SRS resource indicator" is a second value, it indicates the first UL PC parameter set; and if the field "SRS resource set indicator" is a third value, and the field "SRS resource indicator" is a fourth value, it indicates the second UL PC parameter set.

For another example, a first field and a second field are added to the DCI. If the first field is a first value, and the second field is a second value, it indicates the first UL PC parameter set; and if the first field is a third value, and the second field is a fourth value, it indicates the second UL PC parameter set.

It can be understood that the foregoing descriptions are merely two examples. In another optional embodiment, another field combination manner may be used.

In an example, the terminal device may determine the operating state of the terminal device based on a measurement result of a specific subband, and calculate the uplink transmit power based on a UL PC parameter set corresponding to the operating state. Correspondingly, an embodiment of this application provides a communication method, which is applied to a terminal device in a communication system shown in FIG. 1. Optionally, the terminal device may be UE. As shown in FIG. 8, the method may include S801-S802.

S801: A terminal device receives a first UL PC parameter set and a second UL PC parameter set that are sent by a network device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

For specific content of the first UL PC parameter set and the second UL PC parameter set, refer to the foregoing description with reference to FIG. 4. Details are not described herein again.

S802: The terminal device determines a to-be-used UL PC parameter set from the first UL PC parameter set and the second UL PC parameter set based on a measurement result of a target subband.

It can be understood that the to-be-used UL PC parameter set determined by the terminal device may be used to calculate the uplink transmit power of the to-be-sent uplink signal.

In an optional embodiment, after determining to use the first UL PC parameter set, the terminal device calculates a first uplink transmit power of the to-be-sent uplink signal based on the first UL PC parameter set, and transmits the to-be-sent uplink signal to the network device at the first uplink transmit power.

In an optional embodiment, after determining to use the second UL PC parameter set, the terminal device calculates a second uplink transmit power of the to-be-sent uplink signal based on the second UL PC parameter set, and transmits the to-be-sent uplink signal to the network device at the second uplink transmit power.

Optionally, a measurement quantity may include at least one of SS-RSRP, CSI-RSRP, SRS-RSRP, RSSI, and CLI-RSSI.

The following describes three specific implementations for determining the used UL PC parameter set based on the measurement result of the target subband.

In a first implementation, the target subband is an adjacent subband of the to-be-sent uplink signal.

In this implementation, the adjacent subband of the to-be-sent uplink signal is measured, and the used UL PC parameter set is determined based on a measurement result.

Optionally, if the measurement result is less than or equal to threshold 1, it is determined to use the first UL PC parameter set. It can be understood that a small measurement result indicates that there is no downlink signal on the adjacent subband. Therefore, it is determined to be corresponding to the non-full duplex mode.

Optionally, if the measurement result is greater than threshold 1, it is determined to use the second UL PC parameter set. It can be understood that a large measurement result indicates that there is a downlink signal on the adjacent subband. Therefore, it is determined to be corresponding to the full duplex mode.

Optionally, threshold 1 is pre-agreed in a protocol, or is pre-configured by the network device. In an example, before step S802, the method further includes: receiving threshold 1 sent by the network device.

In a second implementation, the target subband is a subband of the to-be-sent uplink signal.

In this implementation, the subband of the to-be-sent uplink signal is measured, and the used UL PC parameter set is determined based on a measurement result.

Optionally, if the measurement result is less than or equal to threshold 2, it is determined to use the first UL PC parameter set. It can be understood that a small measurement result indicates that the target subband is not subjected to interference of the adjacent subband. Therefore, it is determined to be corresponding to the non-full duplex mode.

Optionally, if the measurement result is greater than threshold 2, it is determined to use the second UL PC parameter set. It can be understood that a large measurement result indicates that the target subband is subjected to interference of the adjacent subband. Therefore, it is determined to be corresponding to the full duplex mode.

Optionally, threshold 2 is pre-agreed in a protocol, or is pre-configured by the network device. In an example, before step S802, the method further includes: receiving threshold 2 sent by the network device.

In a third implementation, the target subband is a specified subband. The specified subband is configured by the network device. That is, in this implementation, before step S802, the method further includes: receiving configuration information and/or indication information of the measurement subband sent by the network device. Optionally, the configuration information and/or the indication information of the measurement subband includes a number of the specified subband or frequency domain resource information of the subband.

Optionally, if the measurement result is less than or equal to threshold 3, it is determined to use the first UL PC parameter set. It can be understood that a small measurement result indicates that there is no interference from the specified subband. Therefore, it is determined to be corresponding to the non-full duplex mode.

Optionally, if the measurement result is greater than threshold 3, it is determined to use the second UL PC parameter set. It can be understood that a large measurement result indicates that there is interference from the specified subband. Therefore, it is determined to be corresponding to the full duplex mode.

Optionally, threshold 3 is pre-agreed in a protocol, or is pre-configured by the network device. In an example, before step S802, the method further includes: receiving threshold 3 sent by the network device.

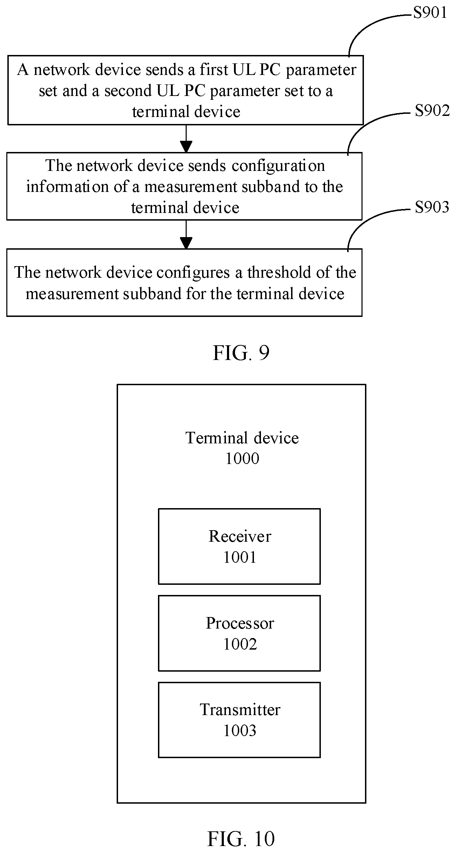

Correspondingly, an embodiment of this application provides a communication method, which is applied to a network device in a communication system shown in FIG. 1. Optionally, the network device may be a base station. As shown in FIG. 9, the method may include S901-S903.

S901: A network device sends a first UL PC parameter set and a second UL PC parameter set to a terminal device.

The first UL PC parameter set corresponds to the non-full duplex mode, and the second UL PC parameter set corresponds to the full duplex mode.

It can be understood that, for an uplink signal corresponding to the non-full duplex mode, the terminal device calculates an uplink transmit power of the uplink signal based on the first UL PC parameter set; and for an uplink signal corresponding to the full duplex mode, the terminal device calculates an uplink transmit power of the uplink signal based on the second UL PC parameter set.

For specific content of the first UL PC parameter set and the second UL PC parameter set, refer to the foregoing description with reference to FIG. 4. Details are not described herein again.

S902: The network device sends configuration information of a measurement subband to the terminal device.

It can be understood that step S902 is an optional step.

Specifically, in the foregoing embodiment in which the target subband is an execution subband, the network device needs to send the configuration information of the measurement subband to the terminal device. The configuration information of the measurement subband indicates the terminal device to determine a specified subband to be measured.

It can be understood that, in the foregoing implementation in which the target subband is the adjacent subband of the to-be-sent uplink signal, and in the implementation in which the target subband is the subband of the to-be-sent uplink signal, step S902 does not need to be performed.

Optionally, the configuration information of the measurement subband includes a number of the specified subband, or information about a frequency domain resource and/or a time domain resource of the subband.

S903: The network device configures a threshold of the measurement subband for the terminal device.

It can be understood that step S903 is an optional step.

Specifically, in the embodiment in which the threshold of the measurement subband of the network device is configured by the network device, the network device needs to send configuration information of the measurement subband to the terminal device, where the configuration information includes the threshold of the measurement subband.

It can be understood that, in the foregoing embodiment in which the threshold is specified in the protocol, step S903 does not need to be performed.

It can be understood that the threshold of the measurement subband is used to assist the terminal device in determining, based on the measurement result of the measurement subband, the to-be-used UL PC parameter set. Specifically, the terminal device compares the measurement result with the threshold, to determine the to-be-used UL PC parameter set.

Optionally, in the foregoing implementation in which the target subband is the adjacent subband of the to-be-sent uplink signal, the network device configures threshold 1 for the terminal device. For specific content of threshold 1, refer to the foregoing description of step S802. Details are not described herein again.

Optionally, in the foregoing implementation in which the target subband is the subband of the to-be-sent uplink signal, the network device configures threshold 2 for the terminal device. For specific content of threshold 2, refer to the foregoing description of step S802. Details are not described herein again.

Optionally, in the foregoing implementation in which the target subband is the specified subband, the network device configures threshold 3 for the terminal device. For specific content of threshold 3, refer to the foregoing description of step S802. Details are not described herein again.

An embodiment of this application further provides a terminal device.

FIG. 10 is a schematic diagram of a logical structure of a terminal device 1000 according to an embodiment of this application.

As shown in FIG. 10, in an optional embodiment, the terminal device 1000 includes a receiver 1001, which may be configured to perform S401 and S402 in FIG. 4, and/or perform other steps described in this application. The terminal device includes a processor 1002, which may be configured to perform S403 in FIG. 4, and/or perform other steps described in this application.

In another optional embodiment, the receiver 1001 may be configured to perform S601 and S602 in FIG. 6, and/or perform other steps described in this application. The processor 1002 may be configured to perform S603 in FIG. 6, and/or perform other steps described in this application.

In another optional embodiment, the receiver 1001 may be configured to perform S801 in FIG. 8, and/or perform other steps described in this application. The processor 1002 may be configured to perform S802 in FIG. 8, and/or perform other steps described in this application.

The terminal device 1000 further includes a transmitter 1301, configured to transmit an uplink signal based on a calculated uplink transmit power. The processor 1002 of the terminal device 1000 may be separately connected to the receiver 1001 and the transmitter 1301.

An embodiment of this application further provides a network device.

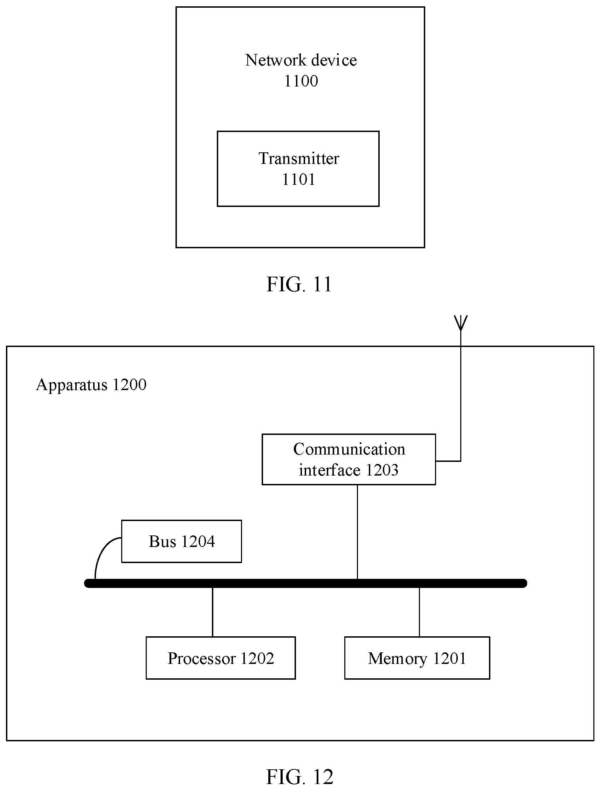

FIG. 11 is a schematic diagram of a logical structure of a network device 1100 according to an embodiment of this application.

In an optional embodiment, as shown in FIG. 11, the network device 1100 includes a transmitter 1101, which may be configured to perform S501 and S502 in FIG. 5, and/or perform other steps described in this application.

In another optional embodiment, the transmitter 1101 may be configured to perform S701 and S702 in FIG. 7, and/or perform other steps described in this application.

In another optional embodiment, the transmitter 1101 may be configured to perform S901, S902, and S903 in FIG. 9, and/or perform other steps described in this application.

It can be understood that the network device 1100 may further include a receiver and a processor that are not shown in FIG. 10. The processor may be separately connected to the receiver and the transmitter 1101.

All related content of the steps in the method embodiments may be cited in function descriptions of corresponding function modules. Details are not described herein again.

In this embodiment, the terminal device 1000 or the network device 1100 may be presented with the function modules divided through integration. The "module" herein may refer to a specific ASIC, a circuit, a processor and a storage device that execute one or more software or firmware programs, an integrated logic circuit, and/or another device that can provide the foregoing functions.

In a simple embodiment, a person skilled in the art may figure out that the terminal device 1000 or the network device 1100 is in a form shown in FIG. 12.

As shown in FIG. 12, an apparatus 1200 may include: a memory 1201, a processor 1202, and a communication interface 1203. The memory 1202 is configured to store a computer executable instruction. When the apparatus 1200 runs, the processor 1201 executes the computer executable instruction stored in the memory 1202, so that the apparatus 1200 executes the communication method provided in the embodiments of this application. The memory 1201, the processor 1202, and the communication interface 1203 are communicatively connected by using the bus 1204. For a specific communication method, refer to related descriptions above and in the accompanying drawings. Details are not described herein again. It should be noted that, in a specific implementation process, the apparatus 1200 may further include other hardware components, which are not enumerated one by one in this specification.

In an example of this application, the transmitter 1101 in FIG. 11 may be implemented by using the communication interface 1203.

In another example of this application, the processor 1002 in FIG. 10 may be implemented by using the processor 1202.

In another example of this application, the receiver 1001 in FIG. 10 may be implemented by using the communication interface 1203.

The communication interface 1203 may be a transceiver or a transceiver circuit. The processor 1202 may be a field-programmable gate array (field-programmable gate array, FPGA), an application specific integrated circuit (application specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

Because the apparatus provided in the embodiments of this application may be configured to perform the communication method, for technical effects that can be achieved by the apparatus, refer to the foregoing method embodiments. Details are not described herein again.

A person of ordinary skill in the art may learn that all or some of the steps in the foregoing method may be implemented by a program instructing relevant hardware. The program may be stored in a computer-readable storage medium, such as a ROM, a RAM, and an optical disc. An embodiment of this application further provides a storage medium. The storage medium may include a memory 1201.

For explanations and beneficial effects of related content in any one of the apparatuses provided above, refer to the corresponding method embodiment provided above. Details are not described herein again.

In the foregoing embodiments, all or some of the foregoing embodiments may be implemented by using software, hardware, firmware, or any combination thereof. During implementation through a software program, all or some of the foregoing embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line (digital subscriber line, DSL)) or a wireless manner (for example, in an infrared, radio, or microwave manner). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, the term "comprising" (comprising) does not exclude another component or another step, and "a" or "one" does not exclude a case of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the spirit and scope of this application. Correspondingly, this specification and the accompanying drawings are merely example descriptions of this application defined by the appended claims, and are considered as having covered any and all modifications, changes, combinations, or equivalents within the scope of this application. It is clear that, a person skilled in the art can make various modifications and variations to this application without departing from the spirit and scope of this application. In this way, this application is also intended to include these modifications and variations made to this application if they fall within the scope of the claims of this application and equivalent technologies thereof.

## Claims

1. A communication method, applied to a terminal device, and comprising:
receiving operating mode configuration information sent by a network device;
receiving a first uplink power control parameter set for a first operating mode and a second uplink power control parameter set for a second operating mode that are sent by the network device;
when it is determined, based on the operating mode configuration information, that a to-be-sent uplink signal corresponds to the first operating mode of the network device, sending the to-be-sent uplink signal to the network device based on a first uplink transmit power; and
when it is determined, based on the operating mode configuration information, that a to-be-sent uplink signal corresponds to the second operating mode of the network device, sending the to-be-sent uplink signal to the network device based on a second uplink transmit power, wherein
the first uplink transmit power is determined based on the first uplink power control parameter set, and the second uplink transmit power is determined based on the second uplink power control parameter set.

2. The method according to claim 1, wherein the first operating mode comprises a non-full duplex mode, and the second operating mode comprises a full duplex mode.

3. The method according to claim 1, wherein the operating mode configuration information comprises uplink and downlink information of at least one time-frequency region, the at least one time-frequency region comprises a time-frequency region of the to-be-sent uplink signal, and the uplink and downlink information indicates that the time-frequency region corresponds to the first operating mode or the second operating mode.

4. The method according to claim 1, wherein the operating mode configuration information comprises operating mode indication information, and the operating mode indication information indicates the first operating mode or the second operating mode.

5. The method according to any one of claims 1 to 4, wherein the first uplink power control parameter set and the second uplink power control parameter set each comprise a parameter of at least one parameter type, and the at least one parameter type comprises a first type; and
a first-type parameter in the first uplink power control parameter set is greater than the first-type parameter in the second uplink power control parameter set; or
a first-type parameter in the first uplink power control parameter set is less than the first-type parameter in the second uplink power control parameter set.

6. A communication method, applied to a terminal device, and comprising:
receiving a first uplink power control parameter set sent by a network device for a first operating mode of the network device and a second uplink power control parameter set sent by the network device for a second operating mode of the network device;
receiving setting information of power control parameters sent by the network device;
sending a to-be-sent uplink signal to the network device based on a first uplink transmit power when the setting information of the power control parameters comprises setting information of the first uplink power control parameter set; and
sending a to-be-sent uplink signal to the network device based on a second uplink transmit power when the setting information of the power control parameters comprises setting information of the second uplink power control parameter set, wherein
the first uplink transmit power is determined based on the first uplink power control parameter set, and the second uplink transmit power is determined based on the second uplink power control parameter set.

7. The method according to claim 6, wherein the first operating mode comprises a non-full duplex mode, and the second operating mode comprises a full duplex mode.

8. The method according to claim 6, wherein the setting information is configuration information.

9. The method according to claim 6, wherein the setting information is indication information, and the indication information comprises information about at least one field in downlink control information DCI.

10. The method according to any one of claims 6 to 9, wherein the first uplink power control parameter set and the second uplink power control parameter set each comprise a parameter of at least one parameter type, and the at least one parameter type comprises a first type; and
a first-type parameter in the first uplink power control parameter set is greater than the first-type parameter in the second uplink power control parameter set; or
a first-type parameter in the first uplink power control parameter set is less than the first-type parameter in the second uplink power control parameter set.

11. A communication method, applied to a terminal device, and comprising:
receiving a first uplink power control parameter set sent by a network device for a first operating mode of the network device and a second uplink power control parameter set sent by the network device for a second operating mode of the network device;
sending a to-be-sent uplink signal to the network device based on a first uplink transmit power when a measurement result obtained by measuring a target subband meets a first power control condition; and
sending a to-be-sent uplink signal to the network device based on a second uplink transmit power when the measurement result obtained by measuring the target subband meets a second power control condition, wherein
the first uplink transmit power is determined based on the first uplink power control parameter set, and the second uplink transmit power is determined based on the second uplink power control parameter set.

12. The method according to claim 11, wherein the first operating mode comprises a non-full duplex mode, and the second operating mode comprises a full duplex mode.

13. The method according to claim 11, wherein the target subband is adjacent to a subband of the to-be-sent uplink signal; or
a frequency domain distance between the target subband and a subband of the to-be-sent uplink signal is less than a first threshold.

14. The method according to claim 11, wherein the target subband is a subband of the to-be-sent uplink signal.

15. The method according to claim 11, wherein the target subband is a specified subband, and the method further comprises:
receiving subband configuration information sent by the network device, wherein the subband configuration information comprises information about the specified subband.

16. The method according to claim 11, wherein the first power control condition is that the measurement result is less than or equal to a first measurement threshold, and the second power control condition is that the measurement result is greater than the first measurement threshold; and
the method further comprises:
receiving configuration information or indication information of a measurement threshold sent by the network device, wherein the configuration information or the indication information comprises the first measurement threshold.

17. The method according to any one of claims 11 to 16, wherein the first uplink power control parameter set and the second uplink power control parameter set each comprise a parameter of at least one parameter type, and the at least one parameter type comprises a first type; and
a first-type parameter in the first uplink power control parameter set is greater than the first-type parameter in the second uplink power control parameter set; or
a first-type parameter in the first uplink power control parameter set is less than the first-type parameter in the second uplink power control parameter set.

18. A communication method, applied to a network device, and comprising:
sending operating mode configuration information to a terminal device; and
sending a first uplink power control parameter set for a first operating mode and a second uplink power control parameter set for a second operating mode to the terminal device, wherein
the operating mode configuration information indicates that an uplink signal of the terminal device corresponds to the first operating mode or the second operating mode of the network device.

19. A communication method, applied to a network device, and comprising:
sending a first uplink power control parameter set for a first operating mode of the network device and a second uplink power control parameter set for a second operating mode of the network device to a terminal device; and
sending setting information of power control parameters to the terminal device, wherein
the setting information of the power control parameters comprises setting information of the first uplink power control parameter set or setting information of the second uplink power control parameter set.

20. A communication method, applied to a network device, and comprising:
sending a first uplink power control parameter set for a first operating mode of the network device and a second uplink power control parameter set for a second operating mode of the network device to a terminal device; and
sending configuration information or indication information of a measurement threshold to the terminal device, wherein
the configuration information or the indication information of the measurement threshold comprises a first measurement threshold, and the first measurement threshold corresponds to measurement of a target subband.

21. A terminal device, comprising a transmitter, a receiver, and a processor separately connected to the transmitter and the receiver, wherein
the receiver is configured to: receive operating mode configuration information sent by a network device; and receive a first uplink power control parameter set for a first operating mode and a second uplink power control parameter set for a second operating mode that are sent by the network device; and
the transmitter is configured to: when it is determined, based on the operating mode configuration information, that a to-be-sent uplink signal corresponds to the first operating mode of the network device, send the to-be-sent uplink signal to the network device based on a first uplink transmit power; and when it is determined, based on the operating mode configuration information, that a to-be-sent uplink signal corresponds to the second operating mode of the network device, send the to-be-sent uplink signal to the network device based on a second uplink transmit power, wherein
the first uplink transmit power is determined based on the first uplink power control parameter set, and the second uplink transmit power is determined based on the second uplink power control parameter set.

22. A terminal device, comprising a transmitter, a receiver, and a processor separately connected to the transmitter and the receiver, wherein
the receiver is configured to: receive a first uplink power control parameter set sent by a network device for a first operating mode of the network device and a second uplink power control parameter set sent by the network device for a second operating mode of the network device; and receive setting information of power control parameters sent by the network device; and
the transmitter is configured to: send a to-be-sent uplink signal to the network device based on a first uplink transmit power when the setting information of the power control parameters comprises setting information of the first uplink power control parameter set; and send a to-be-sent uplink signal to the network device based on a second uplink transmit power when the setting information of the power control parameters comprises setting information of the second uplink power control parameter set, wherein
the first uplink transmit power is determined based on the first uplink power control parameter set, and the second uplink transmit power is determined based on the second uplink power control parameter set.

23. A terminal device, comprising a transmitter, a receiver, and a processor separately connected to the transmitter and the receiver, wherein
the receiver is configured to receive a first uplink power control parameter set sent by a network device for a first operating mode of the network device and a second uplink power control parameter set sent by the network device for a second operating mode of the network device; and
the transmitter is configured to: send a to-be-sent uplink signal to the network device based on a first uplink transmit power when a measurement result obtained by measuring a target subband meets a first power control condition; and send a to-be-sent uplink signal to the network device based on a second uplink transmit power when the measurement result obtained by measuring the target subband meets a second power control condition, wherein
the first uplink transmit power is determined based on the first uplink power control parameter set, and the second uplink transmit power is determined based on the second uplink power control parameter set.

24. A network device, comprising a transmitter, a receiver, and a processor separately connected to the transmitter and the receiver, wherein
the transmitter is configured to: send operating mode configuration information to a terminal device; and send a first uplink power control parameter set for a first operating mode and a second uplink power control parameter set for a second operating mode to the terminal device, wherein
the operating mode configuration information indicates that an uplink signal of the terminal device corresponds to the first operating mode or the second operating mode of the network device.

25. A network device, comprising a transmitter, a receiver, and a processor separately connected to the transmitter and the receiver, wherein
the transmitter is configured to: send a first uplink power control parameter set for a first operating mode of the network device and a second uplink power control parameter set for a second operating mode of the network device to a terminal device; and send setting information of power control parameters to the terminal device, wherein
the setting information of the power control parameters comprises setting information of the first uplink power control parameter set or setting information of the second uplink power control parameter set.

26. A network device, comprising a transmitter, a receiver, and a processor separately connected to the transmitter and the receiver, wherein
the transmitter is configured to: send a first uplink power control parameter set for a first operating mode of the network device and a second uplink power control parameter set for a second operating mode of the network device to a terminal device; and send configuration information or indication information of a measurement threshold to the terminal device, wherein
the configuration information or the indication information of the measurement threshold comprises a first measurement threshold, and the first measurement threshold corresponds to measurement of a target subband.

27. An electronic device, comprising:
a memory, configured to store instructions to be executed by one or more processors of the electronic device; and
a processor, wherein when the processor executes the instructions in the memory, the electronic device is enabled to perform the method according to any one of claims 1 to 5, 6 to 10, 11 to 17, 18, 19, and 20.

28. A non-volatile storage medium, wherein the storage medium stores instructions, and when the instructions are executed on an electronic device, the electronic device is enabled to perform the method according to any one of claims 1 to 5, 6 to 10, 11 to 17, 18, 19, and 20.
